# DEMANDE DE BREVET EUROPEEN

(11) **EP 1 338 956 A1**
(43) Date de publication de la demande: **27.08.2003**
(21) Numéro de dépôt: 02290409.8
(22) Date de dépôt: 20.02.2002
(51) Int. Cl.: G06F 9/38, G06F 15/78

(54) **Dispositif électronique de traitement de données, en particulier processeur audio pour un décodeur audio/vidéo**

(71) Demandeur: STMicroelectronics S.A., 92120 Montrouge (FR)
(72) Inventeur: Audrain, Stéphane, 38000 Grenoble (FR)
(74) Mandataire: Casalonga, Axel

(57) **Abrégé**

Le dispositif électronique de traitement de données comprend p coeurs de processeurs synchrones (CR1, CR2) respectivement cadencés par p signaux d'horloge (CLK1, CLK2) ayant tous une même période T et mutuellement déphasés de 2π/p, et un moyen de mémoire partagée simple accès (XRAM, PTCH) ayant une durée d'accès au plus égale à T/p et cadencé par un signal d'accès de période T/p et synchrone avec lesdits signaux d'horloge, les p coeurs de processeurs étant aptes à accéder séquentiellement et cycliquement au moyen de mémoire à des instants consécutifs temporellement espacés d'une durée égale à T/p.

Application aux processeurs audio des décodeurs DVD.

## Description

L'invention concerne le traitement numérique de données, et plus particulièrement les processeurs de traitement du signal.

L'invention s'applique avantageusement mais non limitativement aux processeurs audio incorporés par exemple dans un décodeur de disque DVD (Digital Versatile Disk).

Un processeur, en particulier un processeur de traitement du signal, est formé classiquement d'un coeur de processeur dédié au traitement proprement dit, de plusieurs mémoires, notamment des mémoires de données et des mémoires de programmes, et de périphériques d'entrée/sortie.

Un tel processeur est capable de traiter un nombre prédéterminé de millions d'instructions par seconde (Mips).

Lorsqu'il est nécessaire d'augmenter le nombre de Mips, une solution consiste à remplacer le coeur de processeur existant par un coeur plus efficace. Cependant, ceci présente un coût en terme de conception ainsi qu'en terme de compilation logicielle.

Une autre solution consiste à dupliquer le processeur de façon à faire travailler les deux processeurs en parallèle. Cependant, ceci présente un coût en terme d'encombrement car la surface du circuit intégré est doublée.

L'invention vise à apporter une autre solution à ce problème.

Un but de l'invention est d'augmenter le nombre de Mips d'un processeur, en particulier un processeur audio, tout en n'ayant qu'un impact minimal sur l'encombrement surfacique.

L'invention propose donc un dispositif électronique de traitement de données, comprenant p coeurs de processeurs synchrones, respectivement cadencés par p signaux d'horloge, ayant tous une même période T et mutuellement déphasés de 2π/p, et un moyen de mémoire partagée simple accès ayant une durée d'accès au plus égale à T/p et cadencé par un signal d'accès de période T/p et synchrone avec lesdits signaux d'horloge. Les p coeurs de processeurs sont ainsi aptes à accéder séquentiellement et cycliquement au moyen de mémoire à des instants consécutifs temporellement espacés d'une durée égale à T/p.

En d'autres termes, l'invention prévoit d'utiliser des coeurs de processeurs synchrones qui se partagent la même mémoire, et en particulier la même mémoire de données. En combinaison avec cette caractéristique, le déphasage des signaux d'horloge cadençant respectivement les coeurs de processeurs permet de simplifier l'échange de données et la commande du traitement entre les différents coeurs de processeurs.

Généralement, chaque coeur de processeur est à architecture pipelinée. Le moyen de mémoire partagée comporte alors au moins deux mémoires distinctes, à savoir une mémoire de programme et une mémoire de données.

Selon un mode de réalisation de l'invention, l'un des coeurs de processeurs est un coeur maître et chaque autre coeur un coeur esclave. Le dispositif comporte alors en outre avantageusement des moyens d'activation, commandés par le coeur maître, et aptes à activer ou à inhiber le signal d'horloge associé à chaque coeur esclave.

A titre d'exemple, le signal d'horloge associé à chaque coeur esclave peut être ainsi un signal d'horloge contrôlé (gated clock) selon une dénomination bien connue de l'homme du métier.

Le moyen de mémoire comporte alors avantageusement une zone apte à contenir des instructions destinées à l'un au moins des coeurs esclaves, ces instructions étant écrites dans ladite zone de mémoire par le coeur maître et lues dans ladite zone de mémoire par le coeur esclave concerné.

Ainsi, non seulement l'invention permet-elle d'augmenter le nombre de Mips avec une augmentation minimale de la surface de silicium, mais elle permet également un meilleur contrôle de la consommation de courant puisque les coeurs esclaves peuvent être activés ou inhibés par le coeur maître, si nécessaire.

Les coeurs de processeurs peuvent être des coeurs de processeurs de traitement du signal, et, selon un mode de réalisation préférentiel, le nombre p est égal à 2.

Dans ce cas, il est avantageusement prévu un générateur apte à générer le signal d'accès cadençant le moyen de mémoire, un diviseur par deux connecté à la sortie du générateur, la sortie de ce diviseur étant reliée d'une part à l'entrée d'horloge de l'un des coeurs de processeurs, et d'autre part à l'entrée d'horloge de l'autre coeur de processeur par l'intermédiaire d'un inverseur.

En d'autres termes, selon ce mode de réalisation, les deux coeurs de processeurs sont cadencés par deux signaux d'horloge ayant la même période T, tandis que le moyen de mémoire est accédée à une période égale à T/2 à l'intérieur de cette période T. Les deux coeurs de processeurs sont synchrones et l'horloge du deuxième coeur de processeur est inversée par rapport à l'horloge du premier coeur de processeur.

Un tel mode de réalisation à deux coeurs de processeurs est particulièrement bien adapté lorsque le dispositif est apte à recevoir des blocs de données successifs destinés à subir deux traitements distincts. En effet, dans ce cas, l'un des coeurs est avantageusement dédié au premier traitement, tandis que l'autre coeur est dédié au deuxième traitement.

C'est le cas par exemple lorsque les deux coeurs de processeurs forment un processeur audio, et que les deux traitements effectués sur chaque bloc de données audio reçu comportent un traitement de décodage (par exemple un traitement de décompression) suivi d'un post-traitement (comportant notamment des traitements de filtrage). Ainsi, le traitement de décodage est avantageusement dédié au coeur maître, tandis que le post-traitement est dédié au coeur esclave.

L'invention a également pour objet un décodeur audio/vidéo, en particulier pour un disque DVD, comprenant un dispositif tel que défini ci-avant.

D'autres avantages et caractéristiques de l'invention apparaîtront à l'examen de la description détaillée d'un mode de réalisation, nullement limitatif, et des dessins annexés, sur lesquels :
- la figure 1 illustre de façon schématique un mode de réalisation d'un dispositif selon l'invention ;
- la figure 2 illustre un chronogramme temporel représentatif du fonctionnement du dispositif de la figure 1 ; et
- la figure 3 illustre plus en détail la structure interne d'une mémoire de données partagée entre les deux coeurs de processeurs du dispositif de la figure 1.

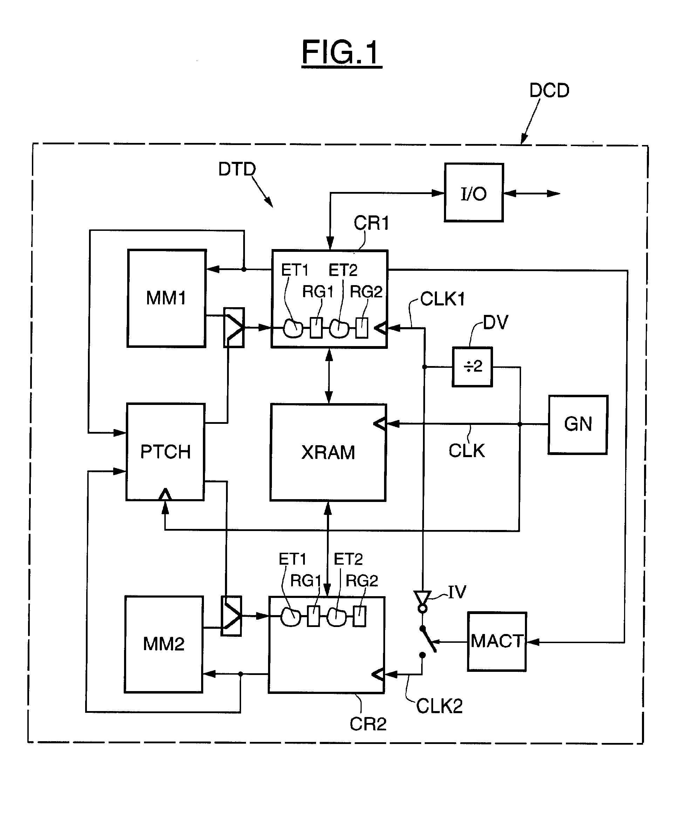

Sur la figure 1, la référence DTD désigne un dispositif de traitement de données, ici par exemple un processeur audio incorporé dans un décodeur audio/vidéo DCD, en particulier pour disque DVD, c'est à dire un disque vidéo multifonctions.

Le processeur audio DTD comporte deux coeurs de processeurs identiques, CR1 et CR2, qui sont des coeurs de processeurs de traitement du signal.

Chaque coeur de processeur est ici à architecture pipelinée. Plus précisément, chaque coeur de processeur, par exemple le coeur CR1, comporte deux étages de traitement, ET1, ET2, et deux niveaux de registres, RG1, RG2, RG3, cadencés par un premier signal d'horloge CLK1.

Le deuxième coeur de processeur CR2 est cadencé par un deuxième signal d'horloge CLK2, qui est inversé, c'est-à-dire déphasé de π, par rapport au premier signal d'horloge CLK1.

Dans l'exemple qui est décrit ici, le deuxième coeur de processeur CR2 est un coeur esclave qui est commandé par le coeur maître CR1. Pour illustrer ceci, on a représenté après l'inverseur IV, un interrupteur activé par des moyens d'activation MACT commandés par le coeur de processeur CR1. Ces moyens d'activation MACT sont ainsi aptes à activer ou inhiber le signal d'horloge CLK2, et par conséquent à activer ou à inhiber le fonctionnement du coeur de processeur CR2.

A titre d'exemple, le signal CLK2 peut être un signal d'horloge contrôlé (gated clock), selon une dénomination bien connue de l'homme du métier, les moyens d'activation MACT et l'interrupteur étant alors réalisés de façon classique et connue en soi par un système de portes logiques.

Le processeur audio DTD comporte également une mémoire partagée simple accès XRAM, qui est une mémoire de données. En fait, cette mémoire XRAM peut être elle-même scindée en deux mémoires, à savoir une mémoire de données proprement dite et une mémoire de coefficient. Ceci étant, ces deux mémoires étant accédées simultanément, on a représenté uniquement un seul bloc XRAM sur la figure 1 à des fins de simplification.

Cette mémoire de données XRAM est cadencée par un signal d'accès CLK, qui a une fréquence double de la fréquence des signaux d'horloge CLK1 et CLK2.

Ainsi, à titre d'exemple, le signal d'horloge CLK peut être généré par un générateur GN, par exemple un quartz, la fréquence de signal CLK étant par exemple égale à 166 MHz. Les signaux d'horloge CLK1 et CLK2 sont alors obtenus en sortie d'un diviseur par deux DV connecté à la sortie du générateur GN. La fréquence des deux signaux d'horloge CLK1 et CLK2 est alors de 83 MHz.

Outre la mémoire de données XRAM, chaque coeur de processeur comporte une mémoire de programme associée MM1, MM2, qui est par exemple une mémoire morte. Il est également prévu une autre mémoire de programme PTCH, qui est par exemple une mémoire vive simple accès et qui est partagée entre les deux coeurs de processeurs CR1 et CR2. Une telle mémoire PTCH, également connue par l'homme du métier sous la dénomination classique de mémoire « patch », permet d'effectuer des corrections ou des modifications dans le programme qui est écrit dans les mémoires mortes MM1 et MM2. A cet égard, il est prévu un duplexeur entre la sortie d'une mémoire de programme MM1 ou MM2 et la sortie de la mémoire PTCH, qui, en fonction d'une logique de contrôle non représentée ici à des fins de simplification, va permettre de sélectionner soit l'instruction issue de la mémoire MM1 ou MM2, soit l'instruction issue de la mémoire PTCH.

Enfin, le processeur audio DTD comporte des périphériques d'entrée/sortie I/O destinés à recevoir des blocs successifs de données audio, ce périphérique étant relié par exemple au coeur de processeur maître CR1.

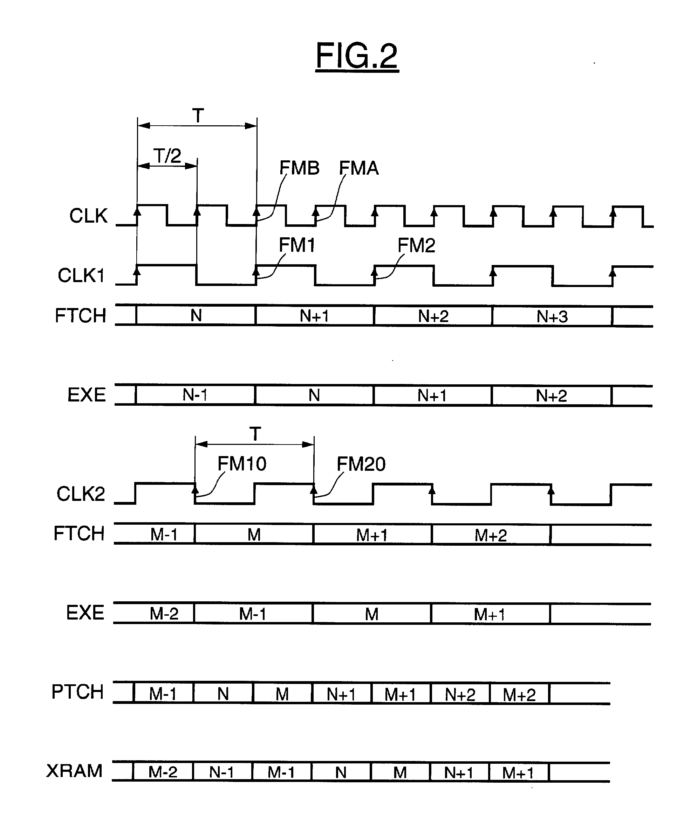

On va maintenant décrire plus en détail, en se référant plus particulièrement à la figure 2, un mode de fonctionnement du dispositif selon l'invention.

Sur la partie haute de la figure 2, on a représenté le signal d'accès CLK associé au moyen de mémoire partagée, comprenant ici la mémoire XRAM et la mémoire PTCH. Ce signal d'horloge CLK a une période égale à T/2, où T désigne la période du premier signal d'horloge CLK1 et du deuxième signal d'horloge CLK2.

Dans l'exemple décrit, l'accès à la mémoire PTCH ou à la mémoire XRAM s'effectue sur les fronts montants du signal d'accès CLK. La durée d'accès à la mémoire XRAM et à la mémoire PTCH est au plus égale à T/2.

Les deux signaux d'horloge CLK1 et CLK2 sont déphasés de 180°, c'est-à-dire qu'ils sont habituellement inversés.

La ligne FTCH désigne, pour chaque coeur de processeur, l'opération de chargement (FETCH en langue anglaise) des différentes instructions issues de la mémoire-programme et destinées à être stockées dans les registres du coeur de processeur correspondant.

Plus précisément, l'instruction N par exemple, est extraite de la mémoire PTCH par l'étage de traitement ET1 au cours d'un cycle donné du signal d'horloge CLK1 et sera stockée dans le registre RG2 au front montant suivant FM1.

La ligne EXE désigne l'opération d'exécution des instructions ayant été stockées dans le registre RG1. Cette exécution est effectuée par l'étage de traitement ET2.

Compte tenu de l'architecture pipelinée des coeurs de traitement, il y a un décalage d'un cycle entre le chargement de chaque instruction et son exécution.

On retrouve également ce décalage d'un cycle sur les lignes FTCH et EXE associées au signal d'horloge CLK2 du coeur de processeur CR2. Cette fois-ci, les instructions ont été référencées par les lettres M, étant donné que ces instructions ne sont pas nécessairement les mêmes que les instructions traitées par le coeur de processeur CR1.

On va maintenant décrire plus en détail les différents accès aux mémoires PTCH et XRAM, par les coeurs de processeurs CR1 et CR2.

Sur les lignes PTCH et XRAM de la figure 2, on a représenté respectivement les accès aux mémoires PTCH et XRAM associés aux instructions correspondantes traitées par les coeurs de processeurs. Ces accès ont par conséquent été référencés, dans un souci de clarté, par les mêmes lettres que celles affectées aux instructions correspondantes.

La mémoire PTCH étant une mémoire de programme, les adresses successives auxquelles sont stockées les instructions successives destinées aux coeurs de processeurs, sont en pratique incrémentées de 1. En conséquence, juste avant le front montant FM1 du signal CLK1, l'adresse à laquelle est stockée l'instruction N+1 est disponible. Par conséquent, dès la montée du front montant FM1, l'étage de traitement ET1 peut accéder à la mémoire PTCH. Ceci étant, dans l'exemple qui est décrit ici, l'accès à la mémoire PTCH s'effectue dans la deuxième moitié du cycle du signal d'horloge CLK1, c'est-à-dire sur le front montant FMA du signal CLK. La mémoire PTCH a en effet une durée d'accès a plus égale à T/2.

L'instruction N+1 sera ensuite disponible juste avant le front montant FM2, de façon, à l'occurrence du front montant FM2, à être stockée dans le registre RG1.

En ce qui concerne l'exécution de l'instruction N, l'étage de traitement ET2 va, au cours de la première moitié du cycle du signal d'horloge CLK1, élaborer l'adresse à laquelle doit être stockée ou lue une donnée dans la mémoire XRAM, de façon à ce que sur le front montant FMA du signal CLK, la mémoire XRAM puisse être accédée. Cet accès à la mémoire XRAM s'effectue donc également pendant la deuxième moitié du cycle du signal d'horloge CLK1.

Parallèlement, la mémoire PTCH va être accédée pendant la deuxième moitié du cycle du signal d'horloge CLK2, de façon à extraire l'instruction M stockée dans la mémoire PTCH.

De même, la mémoire XRAM sera accédée pendant la deuxième moitié du cycle du signal d'horloge CLK2.

Par conséquent, et puisque les deux signaux d'horloge CLK1 et CLK2 sont inversés, les coeurs de processeurs CR1 et CR2 accèdent successivement au cours d'une période T aux mémoires XRAM et PTCH.

Plus précisément entre les fronts montants FM10 et FM1 la mémoire PTCH et la mémoire XRAM sont accédées par le coeur CR1, et par le coeur CR2 entre les fronts montants FM1 et FM20.

Ceci étant en variante, la mémoire PTCH pourrait être accédée au cours de chaque première moitié de cycle des deux signaux d'horloge CLK1 et CLK2.

L'invention permet ainsi de doubler le nombre de Mips traités tout en conservant une seule mémoire de données partagée XRAM et une seule mémoire PTCH partagée.

Lorsque les données sont des données audio, nécessitant deux traitements successifs, à savoir un traitement de décodage (décompression, notamment) et un post-traitement comportant notamment du filtrage, le traitement de décodage est effectué par le coeur de processeur CR1, tandis que le post-traitement est effectué par le coeur de processeur CR2.

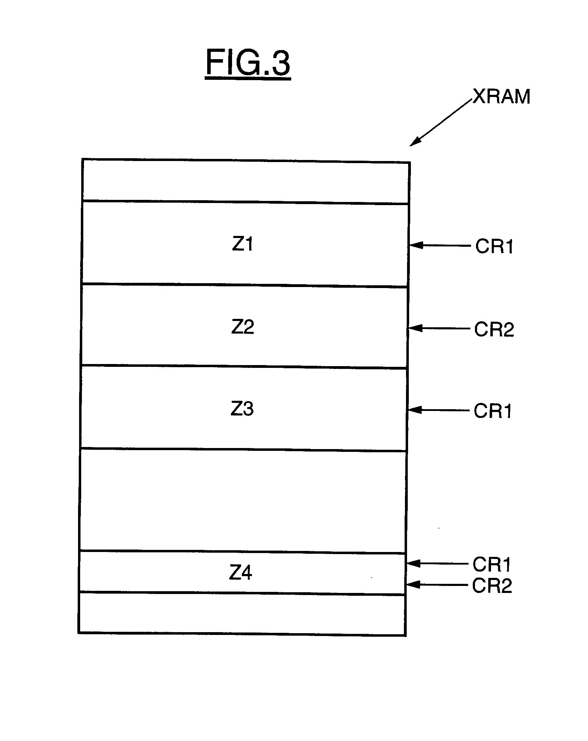

A cet égard, la mémoire de données XRAM comporte trois zones de mémoire, Z1, Z2, Z3 (figure 3).

La zone de mémoire Z1 est une zone de travail utilisée par le coeur de processeur CR1 pour le traitement de décodage.

La zone Z2 est un zone de travail utilisée par le processeur CR2 pour le post-traitement.

La zone Z3 est une zone de mémoire dans laquelle sont stockées les données après post-traitement, avant leur extraction de la mémoire par l'intermédiaire d'un contrôleur de mémoire commandé par le coeur de processeur CR1.

En outre, la mémoire XRAM comporte une zone Z4 qui est destinée à contenir des instructions de programme écrites par le coeur CR1 et destinées à être lues par le coeur esclave CR2 lorsque celui-ci est activé par son signal d'horloge CLK2.

## Revendications

1. Dispositif électronique de traitement de données, comprenant p coeurs de processeurs synchrones (CR1, CR2) respectivement cadencés par p signaux d'horloge (CLK1, CLK2) ayant tous une même période T et mutuellement déphasés de 2π/p, et un moyen de mémoire partagée simple accès (XRAM, PTCH) ayant une durée d'accès au plus égale à T/p et cadencé par un signal d'accès de période T/p et synchrone avec lesdits signaux d'horloge, les p coeurs de processeurs étant aptes à accéder séquentiellement et cycliquement au moyen de mémoire à des instants consécutifs temporellement espacés d'une durée égale à T/p.

2. Dispositif selon la revendication 1, **caractérisé par le fait que** chaque coeur de processeur est à architecture pipelinée, et **par le fait que** le moyen de mémoire comporte au moins deux mémoires distinctes (XRAM, PTCH).

3. Dispositif selon l'une des revendications précédentes, **caractérisé par le fait que** l'un des coeurs de processeurs est un coeur maître (CR1) et chaque autre coeur (CR2) un coeur esclave, **par le fait que** le dispositif comporte en outre des moyens d'activation (MACT), commandés par le coeur maître, et aptes à activer ou à inhiber le signal d'horloge (CLK2) associé à chaque coeur esclave, et **par le fait que** le moyen de mémoire (XRAM) comporte une zone (Z4) apte à contenir des instructions destinées à l'un au moins des coeurs esclaves, ces instructions étant écrites dans ladite zone de mémoire par le coeur maître et lues dans ladite zone de mémoire par le coeur esclave concerné.

4. Dispositif selon l'une des revendications précédentes, **caractérisé par le fait que** les coeurs de processeurs sont des coeurs de processeurs de traitement du signal.

5. Dispositif selon l'une des revendications précédentes, **caractérisé par le fait que** p est égal à 2.

6. Dispositif selon la revendication 5, **caractérisé par le fait qu'**il comporte un générateur (GN) apte à générer le signal d'accès (CLK) cadençant le moyen de mémoire, un diviseur par deux (DV) connecté à la sortie du générateur, la sortie de ce diviseur étant reliée d'une part à l'entrée d'horloge de l'un des coeurs de processeurs, et d'autre part à l'entrée d'horloge de l'autre coeur de processeur par l'intermédiaire d'un inverseur (IV).

7. Dispositif selon la revendication 5 ou 6, **caractérisé par le fait qu'**il est apte à recevoir des blocs de données successifs destinés à subir deux traitements distincts, et **par le fait que** l'un des coeurs (CR1) est dédié au premier traitement, tandis que l'autre coeur (CR2) est dédié au deuxième traitement.

8. Dispositif selon les revendications 3 et 7 prises en combinaison, **caractérisé par le fait que** les deux coeurs de processeurs forment un processeur audio, **par le fait que** les deux traitements effectués sur chaque bloc de données audio reçues comportent un traitement de décodage suivi d'un post-traitement, et **par le fait que** le traitement de décodage est dédié au coeur maître tandis que le post-traitement est dédié au coeur esclave.

9. Dispositif selon l'une des revendications précédentes, **caractérisé par le fait qu'**il est réalisé sous forme d'un circuit intégré.

10. Décodeur audio/vidéo, en particulier pour un disque DVD, comprenant un dispositif selon l'une des revendications 1 à 9.
